# EUROPEAN PATENT SPECIFICATION

(11) **EP 4 484 237 B1**
(45) Date of publication and mention of the grant of the patent: **20.05.2026**
(21) Application number: 22928566.3
(22) Date of filing: 22.02.2022
(51) Int. Cl.: B60W 30/14, B60Q 1/38, B60W 40/04, B60W 60/00, B60W 50/14, B60W 30/16, B60W 30/18

(54) **DRIVING ASSISTANCE METHOD AND DRIVING ASSISTANCE DEVICE**
FAHRASSISTENZVERFAHREN UND FAHRASSISTENZVORRICHTUNG
PROCÉDÉ D'AIDE À LA CONDUITE ET DISPOSITIF D'AIDE À LA CONDUITE

(43) Date of publication of application: 01.01.2025
(73) Proprietor: NISSAN MOTOR CO., LTD., Kanagawa 221-0023 (JP)
(72) Inventor: TANIGUCHI, Yohei, Atsugi-shi, Kanagawa 243-0123 (JP); NAKAMURA,Shohei, Atsugi-shi, Kanagawa 243-0123 (JP); NAGASAWA, Yuji, Atsugi-shi, Kanagawa 243-0123 (JP)
(74) Representative: Grünecker Patent- und Rechtsanwälte PartG mbB
(86) International application number: PCT/JP2022/007370
(87) International publication number: WO 2023/162035

(56) References cited:
- WO-A1-2018/078173
- WO-A1-2020/230306
- JP-A- 2016 197 390
- JP-A- 2020 189 543
- JP-A- 2021 041 859
- US-A1- 2017 349 173
- US-A1- 2020 255 016
- US-A1- 2022 204 054
- US-A1- 2022 340 166

## Description

The present invention relates to a driving assistance method and a driving assistance device.

In PTL 1 described below, a driving assistance control device configured to determine whether or not an occasion when a travel lane can be changed has arrived and present a proposal of a lane change by autonomous driving to a driver when it is determined that a lane change can be made is described.

WO 2020/230306 A1 describes techniques for autonomous vehicle lane change planning and control, including generating candidate lane change trajectories, evaluating safety margins, and selecting a trajectory that satisfies constraints before executing the lane change. US 2017/349173 A1 describes a system for negotiating a lane change by defining three reference targets in the initial and intended lane, and controlling the vehicle to transition among these targets based on safety checks and gap evaluation.

PTL1: JP 2016-071514 A

When after a lane change by autonomous travel control to an adjacent lane is proposed, a space in the adjacent lane becomes insufficient, the proposal is sometimes canceled before the proposal of a lane change is approved.

An object of the present invention is to reduce frequency of cancellation of a proposal of a lane change after a lane change by autonomous travel control to an adjacent lane is proposed.

This is achieved by the independent claims. The dependent claims describe advantageous embodiments.

According to an aspect of the present invention, it is possible to reduce frequency of cancellation of a proposal of a lane change after a lane change by autonomous travel control to an adjacent lane is proposed.

The object and advantages of the invention will be realized and attained by means of the elements and combinations particularly pointed out in the claims. It is to be understood that both the foregoing general description and the following detailed description are exemplary and explanatory and are not restrictive of the invention.

### Brief Description of Drawings

FIG. 1 is a diagram illustrative of an example of a schematic configuration of a vehicle on which a driving assistance device of an embodiment is mounted;
FIG. 2 is a diagram illustrative of some of input devices in FIG. 1;
FIG. 3 is a block diagram of an example of a functional configuration for performing passing assistance control and route travel assistance control in a controller;
FIG. 4 is a flowchart of an example of processing when passing is proposed;
FIG. 5 is a flowchart of an example of processing when lane return is proposed;
FIG. 6 is a flowchart of an example of processing when route travel is proposed;
FIG. 7 is a flowchart of an example of processing when a lane change is made in the case where a passing proposal is adopted;
FIG. 8 is a flowchart of an example of processing when a lane change is made in the case where a lane return proposal is adopted; and
FIG. 9 is a flowchart of an example of processing when a lane change is made in the case where a route travel proposal is adopted.

### Description of Embodiments

### (Configuration)

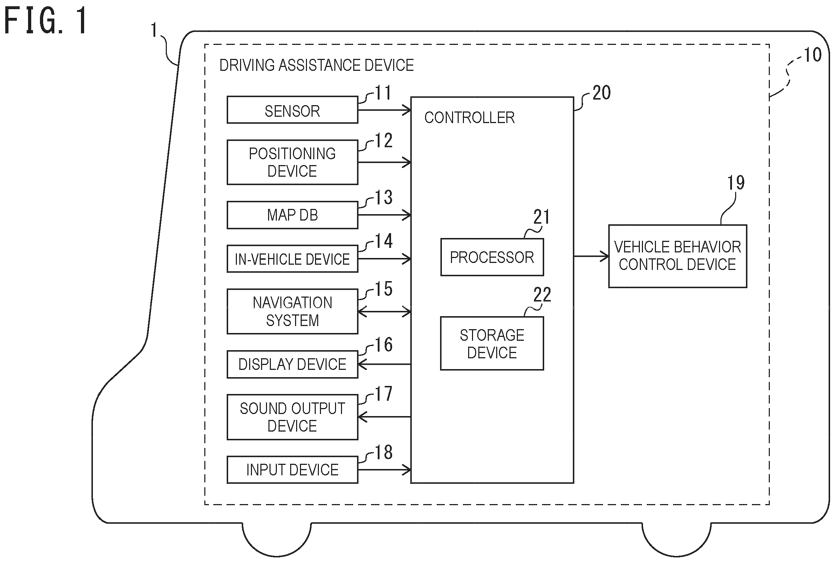

FIG. 1 is a diagram illustrative of an example of a schematic configuration of a vehicle on which a driving assistance device of an embodiment is mounted. A driving assistance device 10 mounted on an own vehicle 1 includes sensors 11, a positioning device 12, a map database (map DB) 13, in-vehicle devices 14, a navigation system 15, display devices 16, sound output devices 17, input devices 18, a vehicle behavior control device 19, and a controller 20. The above-described devices are connected to one another via, for example, a controller area network (CAN) or another in-vehicle LAN in order to perform transmission and reception of information with one another.

The sensors 11 detect a travel state of the own vehicle 1. For example, the sensors 11 include cameras each of which captures an image of one of the front side, the rear side, and both lateral sides of the own vehicle 1. In addition, the sensors 11 include radars each of which detects an object existing on one of the front side, the rear side, and both lateral sides of the own vehicle 1. The sensors 11 include a vehicle speed sensor or the like that detects vehicle speed of the own vehicle 1. The positioning device 12 includes a GPS unit, a gyro sensor, and the like. The positioning device 12 periodically acquires position information of the own vehicle 1 by the GPS unit. In addition, the positioning device 12 detects a current position of the own vehicle 1, based on the position information of the own vehicle 1, angle change information acquired from the gyro sensor, and vehicle speed acquired from the vehicle speed sensor.

The map database 13 is a memory that stores three-dimensional high-definition map information including position information of various types of facilities and specific points and that is configured to be accessible from the controller 20. The three-dimensional high-definition map information is map information in which detailed and highly precise position information of a curved road and the amount of curvature (for example, curvature or radius of curvature) thereof, a junction of roads, a branch point, a tollgate, a point of reduction in the number of lanes, and the like is associated with the map information as three-dimensional information.

The in-vehicle devices 14 are various types of devices mounted on the own vehicle 1 and operate in accordance with operation performed by a passenger (for example, a driver). Examples of such in-vehicle devices include a steering wheel, an accelerator pedal, a brake pedal, turn signals, windshield wipers, lights, a horn, other specific switches, and the like.

The navigation system 15 acquires current position information of the own vehicle 1 from the positioning device 12 and, by superimposing the position of the own vehicle 1 on map information for navigation, displays the current position on a display or the like. In addition, the navigation system 15 performs navigation control to, when a destination is set, set a route from the current position of the own vehicle 1 to the destination as a target travel route and guide the passenger along the target travel route. In the navigation control, the navigation system 15 displays the target travel route on a map on the display and informs the passenger of the target travel route by voice or the like. The target travel route set by the navigation system 15 is also used in a route travel assistance control performed by the controller 20. The route travel assistance control is control to cause the own vehicle 1 to autonomously travel to the destination along the set target travel route.

The display devices 16 include various types of displays that are installed at positions at which the passenger can visually recognize the displays. The display devices 16 notify the passenger of various types of presented information in accordance with control performed by the controller 20. The sound output devices 17 are devices to output acoustic information, such as a speaker that the navigation system 15 includes, a speaker of an audio device, and a buzzer. The sound output devices 17 notify the passenger of various types of presented information in accordance with control performed by the controller 20.

The input devices 18 are devices, such as a button switch that enables the passenger to input an operation by manual operation, a touch panel arranged on a display screen, and a microphone that enables the passenger to input an operation by voice. The passenger can input setting information by operating the input devices 18 in response to presented information presented by the display devices 16 and the sound output devices 17.

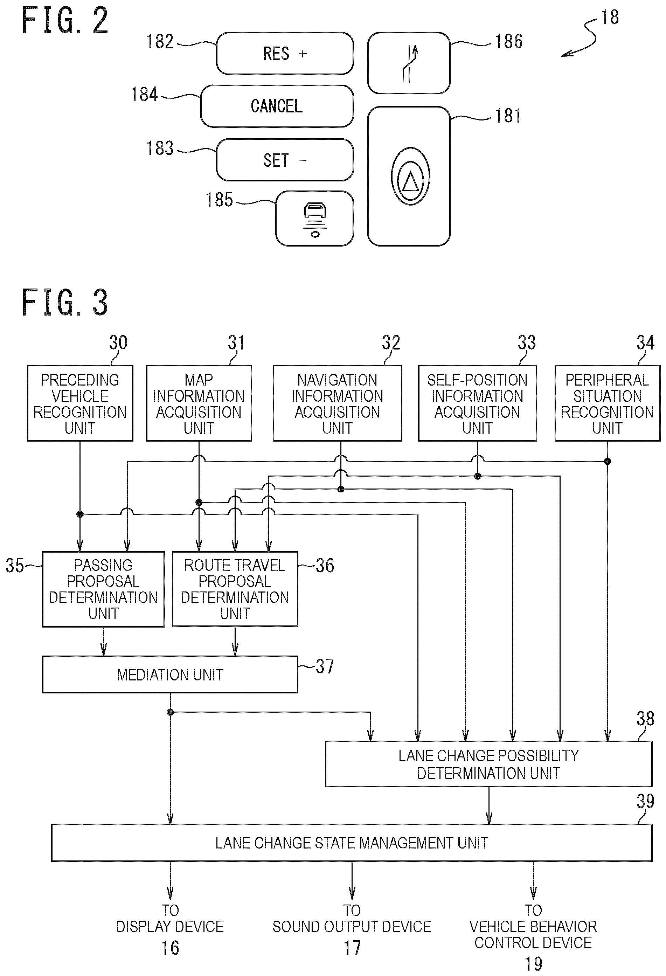

FIG. 2 is a diagram illustrative of some of the input devices 18 of the present embodiment. The input devices 18 may be a button switch group that is arranged on, for example, a spoke of the steering wheel. The input devices 18 are used when turning-on and -off and the like of autonomous travel control performed by the controller 20 are set. The input devices 18 include a main switch 181, a resume/accelerate switch 182, a set/coast switch 183, a cancel switch 184, an inter-vehicle distance adjustment switch 185, and a lane change assistance switch 186. The main switch 181 is a switch to turn on and off the autonomous travel control performed by the controller 20. The resume/accelerate switch 182 is a switch to, after the autonomous travel control is turned off, set resumption of the autonomous travel control at a set speed before the turning-off of the autonomous travel control or to increase the set speed. The set/coast switch 183 is a switch to start the autonomous travel control. In order to start the autonomous travel control, after the autonomous travel control is turned on by the main switch 181, the set/coast switch 183 is pressed. The set/coast switch 183 is also a switch to reduce the set speed. The cancel switch 184 is a switch to cancel the autonomous travel control. The inter-vehicle distance adjustment switch 185 is a switch to set an inter-vehicle distance to a preceding vehicle. The lane change assistance switch 186 is a switch to, when the controller 20 confirms start of a lane change with the passenger, instruct (approve) the start of the lane change. Note that, in addition to the button switch group illustrated in FIG. 2, a turn signal lever for turning on a turn signal and switches of other in-vehicle devices 14 can be used as the input devices 18.

The vehicle behavior control device 19 controls vehicle behavior of the own vehicle 1. For example, when the own vehicle 1 performs constant speed travel at a set speed by the autonomous travel control, the vehicle behavior control device 19 controls operation of a drive mechanism and brake operation to achieve acceleration/deceleration and travel speed that enable the own vehicle 1 to travel at the set speed. In addition, when the own vehicle 1 travels following a preceding vehicle by the autonomous travel control, the vehicle behavior control device 19 also likewise controls the operation of the drive mechanism and the brake. Note that the operation control of the drive mechanism includes operation of an internal-combustion engine in the case of an engine-driven vehicle and operation of a motor for traveling in the case of an electric vehicle. In addition, the operation control of the drive mechanism includes torque distribution between an internal-combustion engine and a motor for traveling in the case of a hybrid vehicle.

In addition, when the vehicle behavior control device 19 performs autonomous steering control, which will be described later, by the autonomous travel control, the vehicle behavior control device 19 performs steering control of the own vehicle 1 by controlling operation of a steering actuator in addition to the operation control of the drive mechanism and the brake.

The controller 20 is one or a plurality of electronic control units (ECUs) for controlling travel of the own vehicle 1 and includes a processor 21 and peripheral components, such as a storage device 22. The processor 21 may be, for example, a CPU or an MPU. The storage device 22 may include a semiconductor storage device, a magnetic storage device, an optical storage device, or the like. The storage device 22 may include registers, a cache memory, and a memory, such as a ROM and a RAM, that is used as a main storage device. Functions of the controller 20, which will be described below, are achieved by, for example, the processor 21 executing computer programs stored in the storage device 22.

The controller 20 achieves a travel information acquisition function to acquire information relating to a travel state of the own vehicle 1 and performs autonomous travel control to autonomously control travel speed and/or steering of the own vehicle 1. The travel information acquisition function is a function to acquire travel information relating to a travel state of the own vehicle 1. For example, the controller 20 acquires, as the travel information, image information of the outside of the vehicle captured by the cameras in the sensors 11, a detection result by the radars therein, and vehicle speed information from the vehicle speed sensor therein.

Further, the controller 20 acquires, as the travel information, the current position information of the own vehicle 1 from the positioning device 12. The controller 20 acquires, as the travel information, a set destination and a target travel route to the destination from the navigation system 15. The controller 20 acquires, as the travel information, map information, such as position information of a curved road and the amount of curvature (for example, curvature or radius of curvature) thereof, a junction of roads, a branch point, a tollgate, a point of reduction in the number of lanes, and the like and lane information, from the map database 13. The controller 20 acquires, as the travel information, information about operation of the in-vehicle devices 14 performed by the passenger from the in-vehicle devices 14.

In the autonomous travel control, the controller 20 autonomously controls travel of the own vehicle 1 without depending on operation performed by the passenger. The autonomous travel control includes autonomous speed control to autonomously control travel speed of the own vehicle 1 and autonomous steering control to autonomously control steering of the own vehicle 1.

In the autonomous speed control, when the controller 20 is detecting a preceding vehicle, the controller 20 controls the own vehicle 1 to travel following the preceding vehicle while performing inter-vehicle distance control in such a way as to keep inter-vehicle distance matching vehicle speed, with a vehicle speed set by the passenger or a speed limit as an upper limit. In contrast, when the controller 20 is not detecting a preceding vehicle, the controller 20 controls the own vehicle 1 to perform constant speed travel at the vehicle speed set by the passenger or the speed limit. The former and the latter are also referred to as inter-vehicle distance control and constant speed control, respectively.

The constant speed control is performed when it is detected by a front view radar or the like in the sensors 11 that no preceding vehicle exists ahead of the own vehicle 1 in a lane in which the own vehicle 1 is traveling. In the constant speed control, the controller 20 controls operation of the drive mechanism, such as the engine and the brake, by the vehicle behavior control device 19 while feeding back vehicle speed data detected by the vehicle speed sensor in such a manner that the own vehicle 1 maintains a set travel speed. The inter-vehicle distance control is performed when it is detected by the front view radar or the like in the sensors 11 that a preceding vehicle exists ahead of the own vehicle 1 in the lane in which the own vehicle 1 is traveling. In the inter-vehicle distance control, the controller 20 controls operation of the drive mechanism, such as the engine and the brake, by the vehicle behavior control device 19 while feeding back inter-vehicle distance data detected by the front view radar in such a manner that the own vehicle 1 maintains a set inter-vehicle distance with the set travel speed as an upper limit.

In the autonomous steering control, the controller 20 performs the steering control of the own vehicle 1 by controlling operation of the steering actuator, based on the travel information acquired by the travel information acquisition function. The autonomous steering control includes lane-keeping control, lane change assistance control, passing assistance control, and the route travel assistance control.

In the lane-keeping control, the controller 20 assists steering wheel operation performed by the passenger by controlling the steering actuator in such a way that, for example, the own vehicle 1 travels substantially along the center of a lane.

In the lane change assistance control, when the passenger operates the turn signal lever, the controller 20 turns on a turn signal and determines whether or not a predetermined lane change start condition is established, based on various types of travel information acquired by the travel information acquisition function. The controller 20 starts the lane change operation when the lane change start condition is satisfied.

In the lane change operation, the controller 20 performs lane change manipulation to cause the own vehicle 1 to laterally move to an adjacent lane that is a lane to which the own vehicle 1 is to make a lane change (hereinafter, sometimes referred to as "destination lane"). While the controller 20 is performing the lane change operation, the controller 20 presents information indicating that the own vehicle 1 is automatically making a lane change, by a display device 16. When the lane change manipulation is finished, the controller 20 turns off the turn signal and starts performance of a lane-keeping function in the lane after lane change.

In the passing assistance control, when the controller 20 detects a preceding vehicle that is slower than the own vehicle 1 ahead of the own vehicle 1 in the lane in which the own vehicle 1 is traveling and a predetermined passing proposal condition is satisfied, the controller 20 proposes making a lane change by the autonomous travel control and passing the preceding vehicle, to the passenger. Hereinafter, a proposal to make a lane change to pass a preceding vehicle is sometimes referred to as "passing proposal". When the passenger approves the passing proposal by operating the lane change assistance switch 186 in the input devices 18 in response to the presentation of the passing proposal and a predetermined passing execution condition is satisfied, the controller 20 performs automated lane change. In the automated lane change, the controller 20 performs the lane change operation in such a way that the own vehicle 1 moves to the destination lane.

Further, when after the own vehicle 1 has passed the preceding vehicle, a predetermined lane return proposal condition is satisfied, the controller 20 proposes making a lane change by the autonomous travel control and returning to an original lane before passing, to the passenger by a display device 16. Hereinafter, a proposal of a lane change to return to the original lane after passing a preceding vehicle is sometimes referred to as "lane return proposal". When the passenger approves the lane return proposal by operating the lane change assistance switch 186 in the input devices 18 in response to the presentation of the lane return proposal and a predetermined lane return execution condition is satisfied, the controller 20 performs the automated lane change. In the automated lane change, the controller 20 performs the lane change operation in such a way that the own vehicle 1 moves to the original lane. Hereinafter, a function of the controller 20 to perform the passing assistance control is sometimes referred to as "passing assistance function".

In the route travel assistance control, when a predetermined route travel execution condition is satisfied before the own vehicle 1 reaches a travel direction change point, such as a branch point, a junction, an exit, and a tollgate, that exists on the target travel route set by the navigation system 15, the controller 20 proposes making a lane change by the autonomous travel control to cause the vehicle to travel along the target travel route, to the passenger. Hereinafter, a proposal to make a lane change to cause the vehicle to travel along the target travel route is sometimes referred to as "route travel proposal". When the passenger approves the route travel proposal by operating the lane change assistance switch 186 in the input devices 18 in response to the presentation of the route travel proposal and the predetermined route travel execution condition is satisfied, the controller 20 performs the automated lane change. In the automated lane change, the controller 20 performs the lane change operation in such a way that the own vehicle 1 moves to the destination lane. Hereinafter, a function of the controller 20 to perform the route travel assistance control is sometimes referred to as "route travel assistance function".

FIG. 3 is a block diagram of an example of a functional configuration for performing the passing assistance control and the route travel assistance control in the controller 20. The controller 20 includes a preceding vehicle recognition unit 30, a map information acquisition unit 31, a navigation information acquisition unit 32, a self-position information acquisition unit 33, a peripheral situation recognition unit 34, a passing proposal determination unit 35, a route travel proposal determination unit 36, a mediation unit 37, a lane change possibility determination unit 38, and a lane change state management unit 39.

The preceding vehicle recognition unit 30 recognizes a preceding vehicle existing ahead of the own vehicle 1 in the lane in which the own vehicle 1 is traveling, based on the travel information and detects relative speed Vr (Vr = vehicle speed Vp of the preceding vehicle - vehicle speed Vh of the own vehicle) of the preceding vehicle with respect to the own vehicle 1.

The map information acquisition unit 31 acquires map information from the map database 13 or by a not-illustrated communication device.

The navigation information acquisition unit 32 acquires route information relating to a target travel route to a destination from the navigation system 15. The self-position information acquisition unit 33 acquires current position information relating to the current position of the own vehicle 1 from the positioning device 12. The peripheral situation recognition unit 34 recognizes a situation in the surroundings of the own vehicle 1 (for example, other vehicles and white lines), based on the travel information. In particular, the peripheral situation recognition unit 34 recognizes distance d in a lane extension direction between another vehicle in a destination lane and the own vehicle 1. For example, the distance d may be inter-vehicle distance in the lane extension direction or inter-vehicle time between the another vehicle and the own vehicle 1.

When the preceding vehicle recognition unit 30 recognizes a preceding vehicle, the passing proposal determination unit 35 determines whether or not the predetermined passing proposal condition is satisfied. For example, the passing proposal condition may include the following conditions.
- The passing assistance function is effective.
- The relative speed Vr of the preceding vehicle with respect to the own vehicle 1 is less than a threshold speed Vt.
- The distance d between another vehicle in the destination lane and the own vehicle 1 is greater than or equal to a distance threshold value Dp.
- Other lane change permission conditions (for example, a lane marking does not prohibit lane change, radius of curvature of the road is greater than or equal to a threshold value, and the like) are satisfied.

In the passing proposal condition, the distance threshold value Dp is set to a comparatively long value d1.

When the passing proposal condition is satisfied, the passing proposal determination unit 35 outputs a passing proposal request to the mediation unit 37.

When the passing assisted by the passing assistance control is finished, the passing proposal determination unit 35 determines whether or not the predetermined lane return proposal condition is satisfied. For example, the lane return proposal condition may include the following conditions.
- The passing assistance function is effective.
- The distance d between another vehicle in the destination lane and the own vehicle 1 is greater than or equal to the distance threshold value Dp.
- Other lane change permission conditions are satisfied.

In the lane return proposal condition, the distance threshold value Dp is set to the value d1.

When the lane return proposal condition is satisfied, the passing proposal determination unit 35 outputs a lane return proposal request to the mediation unit 37.

On the other hand, the route travel proposal determination unit 36 selects a lane in which the own vehicle 1 is currently required to travel (hereinafter, sometimes referred to as "target lane") in order to travel along the target travel route set by the navigation system 15 and determines whether or not a predetermined route travel proposal condition is satisfied. For example, the route travel proposal condition may include the following conditions.

- The route travel assistance function is effective.
- The lane in which the own vehicle 1 is currently traveling and the target lane are different from each other.
- Distance dr from the current position of the own vehicle 1 to a travel direction change point is a distance da or less and a distance db or more. For example, the distance da may be 2300 m + 400 m × N, and the distance db may be 700 m + 400 m × N. The natural number N is the number of lane changes required for the own vehicle 1 to move from the lane in which the own vehicle 1 is currently traveling to the target lane.
- A lane change to the target lane can be made (for example, a lane marking does not prohibit lane change, radius of curvature of the road is greater than or equal to a threshold value, and the like).

That is, the route travel proposal determination unit 36 determines whether or not the route travel proposal condition is satisfied regardless of the distance d in the lane extension direction between another vehicle in the destination lane and the own vehicle 1. When the route travel proposal condition is satisfied, the route travel proposal determination unit 36 sets a proposal point that is a point at which a route travel proposal is presented. When the own vehicle 1 reaches the proposal point, the route travel proposal determination unit 36 outputs a route travel proposal request to the mediation unit 37.

The mediation unit 37 mediates between the passing proposal request that the passing proposal determination unit 35 outputs and the route travel proposal request that the route travel proposal determination unit 36 outputs. When only the passing proposal request is output, the mediation unit 37 adopts the passing proposal, and when only the route travel proposal request is output, the mediation unit 37 adopts the route travel proposal. When both the passing proposal request and the route travel proposal request are output, the mediation unit 37 adopts either one of the passing proposal and the route travel proposal. For example, the mediation unit 37 may preferentially adopt the route travel proposal. Likewise, the mediation unit 37 mediates between the lane return proposal request that the passing proposal determination unit 35 outputs and the route travel proposal request that the route travel proposal determination unit 36 outputs. The mediation unit 37 outputs a mediation result to the lane change possibility determination unit 38 and the lane change state management unit 39.

When the mediation unit 37 adopts the passing proposal, the lane change state management unit 39 outputs passing information for presenting the passing proposal to the passenger by a display device 16 or a sound output device 17. When the mediation unit 37 adopts the lane return proposal, the lane change state management unit 39 outputs lane return information for presenting the lane return proposal to the passenger by a display device 16 or a sound output device 17. When the mediation unit 37 adopts the route travel proposal, the lane change state management unit 39 outputs route travel information for presenting the route travel proposal to the passenger by a display device 16 or a sound output device 17.

When the lane change state management unit 39 presents the passing proposal, the lane change state management unit 39 determines whether or not a predetermined passing proposal continuation condition is established. For example, the passing proposal continuation condition may include the following conditions.
- The passing assistance function is effective.
- The relative speed Vr of the preceding vehicle with respect to the own vehicle 1 is less than the threshold speed Vt.
- The distance d in the lane extension direction between another vehicle in the destination lane and the own vehicle 1 is greater than or equal to the distance threshold value Dp.
- Other lane change permission conditions are satisfied.

In the passing proposal continuation condition, the distance threshold value Dp is set to a comparatively short value d2. The distance threshold value d2 may be a value shorter than the distance threshold value d1 (d2<d1). While the passing proposal continuation condition is established, the lane change state management unit 39 continues to present the passing proposal. When the passing proposal continuation condition ceases to be established, the lane change state management unit 39 cancels the passing proposal.

Likewise, when the lane change state management unit 39 presents the lane return proposal, the lane change state management unit 39 determines whether or not a predetermined lane return proposal continuation condition is established. For example, the lane return proposal continuation condition may include the following conditions.
- The passing assistance function is effective.
- The distance d in the lane extension direction between another vehicle in the destination lane and the own vehicle 1 is greater than or equal to the distance threshold value Dp.
- Other lane change permission conditions are satisfied.

In the lane return proposal continuation condition, the distance threshold value Dp is set to the value d2. While the lane return proposal continuation condition is established, the lane change state management unit 39 continues to present the lane return proposal. When the lane return proposal continuation condition ceases to be established, the lane change state management unit 39 cancels the lane return proposal.

When during continuation of the passing proposal, the passenger approves the passing proposal by operating the lane change assistance switch 186 in the input devices 18, the lane change state management unit 39 turns on a turn signal. For example, the lane change state management unit 39 may turn on a turn signal immediately after the lane change assistance switch 186 is operated.

In addition, when the passenger approves the passing proposal, the lane change possibility determination unit 38 determines whether or not a predetermined passing execution condition is established. The passing execution condition may be the same condition as, for example, the passing proposal continuation condition.

When the passenger approves the passing proposal and the passing execution condition is satisfied, the lane change state management unit 39 starts the automated lane change. In the automated lane change, the lane change state management unit 39 starts the lane change operation in such a way that the own vehicle 1 moves to the destination lane.

When during continuation of the lane return proposal, the passenger approves the lane return proposal by operating the lane change assistance switch 186 in the input devices 18, the lane change state management unit 39 turns on a turn signal. For example, the lane change state management unit 39 may turn on a turn signal immediately after the lane change assistance switch 186 is operated.

In addition, when the passenger approves the lane return proposal, the lane change possibility determination unit 38 determines whether or not a predetermined lane return execution condition is established. The lane return execution condition may be the same condition as, for example, the lane return proposal continuation condition.

When the passenger approves the lane return proposal and the lane return execution condition is satisfied, the lane change state management unit 39 starts the automated lane change. In the automated lane change, the lane change state management unit 39 starts the lane change operation in such a way that the own vehicle 1 moves to the original lane.

When the lane change state management unit 39 presents the route travel proposal, the lane change state management unit 39 determines whether or not a predetermined route travel proposal continuation condition is established. For example, the route travel proposal continuation condition may include the following conditions.
- The route travel assistance function is effective.
- The lane in which the own vehicle 1 is currently traveling and the target lane are different from each other.
- The distance dr from the current position of the own vehicle 1 to a travel direction change point is the distance da or less and the distance db or more.
- The distance d in the lane extension direction between another vehicle in the destination lane and the own vehicle 1 is greater than or equal to the distance threshold value Dp.

In the route travel proposal continuation condition, the distance threshold value Dp is set to the value d2.

When during continuation of the route travel proposal, the passenger approves the route travel proposal by operating the lane change assistance switch 186 in the input devices 18, the lane change possibility determination unit 38 determines whether or not a predetermined route travel execution condition is established. The route travel execution condition may be the same condition as the route travel proposal continuation condition. In addition, the lane change possibility determination unit 38 determines whether or not a lane change to the target lane side can be made (for example, a lane marking does not prohibit lane change, radius of curvature of the road is greater than or equal to a threshold value, and the like).

When the route travel execution condition is satisfied and a lane change to the target lane side can be made, the lane change state management unit 39 turns on a turn signal and performs the lane change operation. In addition, under the condition that the route travel execution condition is satisfied, the lane change state management unit 39 starts the lane change operation in such a way that the own vehicle 1 moves to the destination lane.

The vehicle behavior control device 19 performs steering control of the own vehicle 1 by controlling operation of the steering actuator, based on a command from the lane change state management unit 39.

### (Operation)

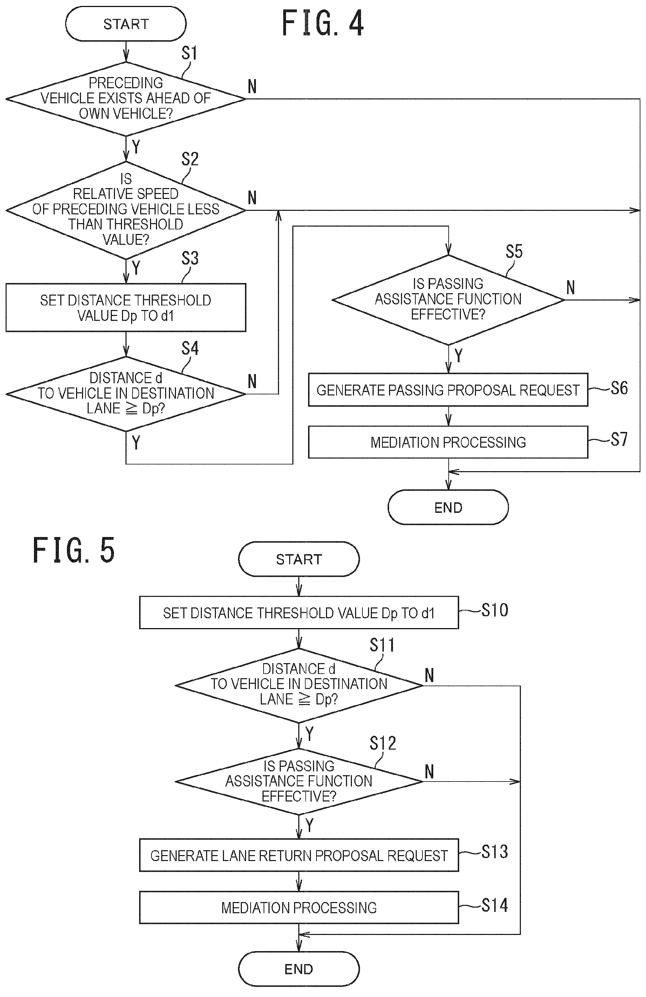

FIG. 4 is a flowchart of an example of processing when passing is proposed. In step S1, the passing proposal determination unit 35 determines whether or not a preceding vehicle exists ahead of the own vehicle 1. When a preceding vehicle exists (step S1: Y), the process proceeds to step S2. When no preceding vehicle exists (step S1: N), the process terminates.

In step S2, the passing proposal determination unit 35 determines whether or not relative speed Vr of the preceding vehicle is less than a threshold speed Vt. When the relative speed Vr is less than the threshold speed Vt (step S2: Y), the process proceeds to step S3. When the relative speed Vr is not less than the threshold speed Vt (step S2: N), the process terminates. In step S3, the passing proposal determination unit 35 sets a distance threshold value Dp to a value d1.

In step S4, the passing proposal determination unit 35 determines whether or not distance d between another vehicle in a destination lane and the own vehicle 1 is greater than or equal to the distance threshold value Dp. When the distance d is greater than or equal to the distance threshold value Dp (step S4: Y), the process proceeds to step S5. When the distance d is not greater than or equal to the distance threshold value Dp (step S4: N), the process terminates.

In step S5, the passing proposal determination unit 35 determines whether or not the passing assistance function is effective. When the passing assistance function is effective (step S5: Y), the process proceeds to step S6. When the passing assistance function is not effective (step S5: N), the process terminates.

In step S6, the passing proposal determination unit 35 outputs a passing proposal request to the mediation unit 37. In step S7, the mediation unit 37 mediates between the passing proposal request and a route travel proposal request. Subsequently, the process terminates.

FIG. 5 is a flowchart of an example of processing when lane return is proposed. In step S10, the passing proposal determination unit 35 sets the distance threshold value Dp to the value d1.

In step S11, the passing proposal determination unit 35 determines whether or not distance d between another vehicle in a destination lane and the own vehicle 1 is greater than or equal to the distance threshold value Dp. When the distance d is greater than or equal to the distance threshold value Dp (step S11: Y), the process proceeds to step S12. When the distance d is not greater than or equal to the distance threshold value Dp (step S11: N), the process terminates.

In step S12, the passing proposal determination unit 35 determines whether or not the passing assistance function is effective. When the passing assistance function is effective (step S12: Y), the process proceeds to step S13. When the passing assistance function is not effective (step S12: N), the process terminates.

In step S13, the passing proposal determination unit 35 outputs a lane return proposal request to the mediation unit 37. In step S14, the mediation unit 37 mediates between the lane return proposal request and a route travel proposal request. Subsequently, the process terminates.

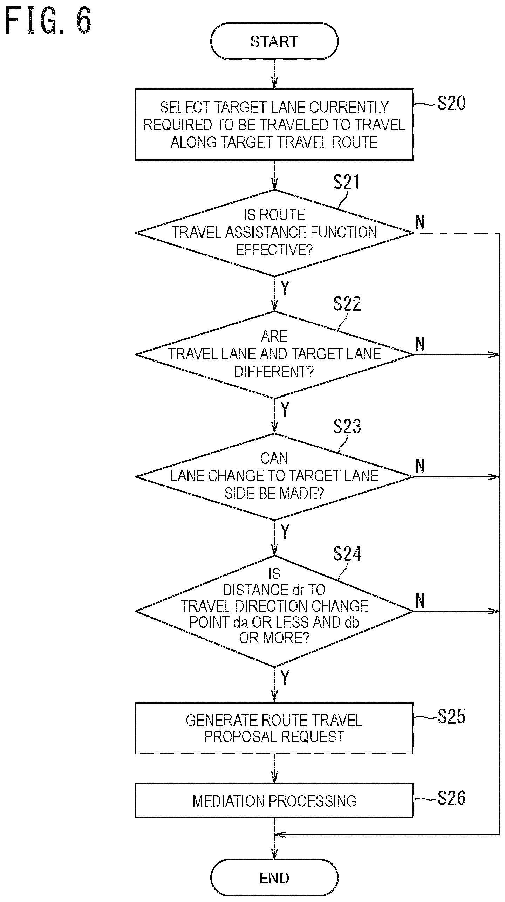

FIG. 6 is a flowchart of an example of processing when route travel is proposed. In step S20, the route travel proposal determination unit 36 selects a target lane for the own vehicle 1 to travel along a target travel route.

In step S21, the route travel proposal determination unit 36 determines whether or not the route travel assistance function is effective. When the route travel assistance function is effective (step S21: Y), the process proceeds to step S22. When the route travel assistance function is not effective (step S21: N), the process terminates.

In step S22, the route travel proposal determination unit 36 determines whether or not a travel lane of the own vehicle 1 and the target lane are different from each other. When the travel lane of the own vehicle 1 and the target lane are different from each other (step S22: Y), the process proceeds to step S23. When the travel lane of the own vehicle 1 and the target lane are not different from each other (step S22: N), the process terminates.

In step S23, the route travel proposal determination unit 36 determines whether or not a lane change to the target lane side can be made. When a lane change to the target lane side can be made (step S23: Y), the process proceeds to step S24. When a lane change to the target lane side cannot be made (step S23: N), the process terminates.

In step S24, the route travel proposal determination unit 36 determines whether or not distance dr from the current position of the own vehicle 1 to a travel direction change point is a distance da or less and a distance db or more. When the distance dr is the distance da or less and the distance db or more (step S24: Y), the process proceeds to step S25. When the distance dr is not the distance da or less and the distance db or more (step S24: N), the process terminates.

In step S25, the route travel proposal determination unit 36 outputs a route travel proposal request to the mediation unit 37. In step S26, the mediation unit 37 mediates between the passing proposal request and the route travel proposal request. Alternatively, the mediation unit 37 mediates between the lane return proposal request and the route travel proposal request. Subsequently, the process terminates.

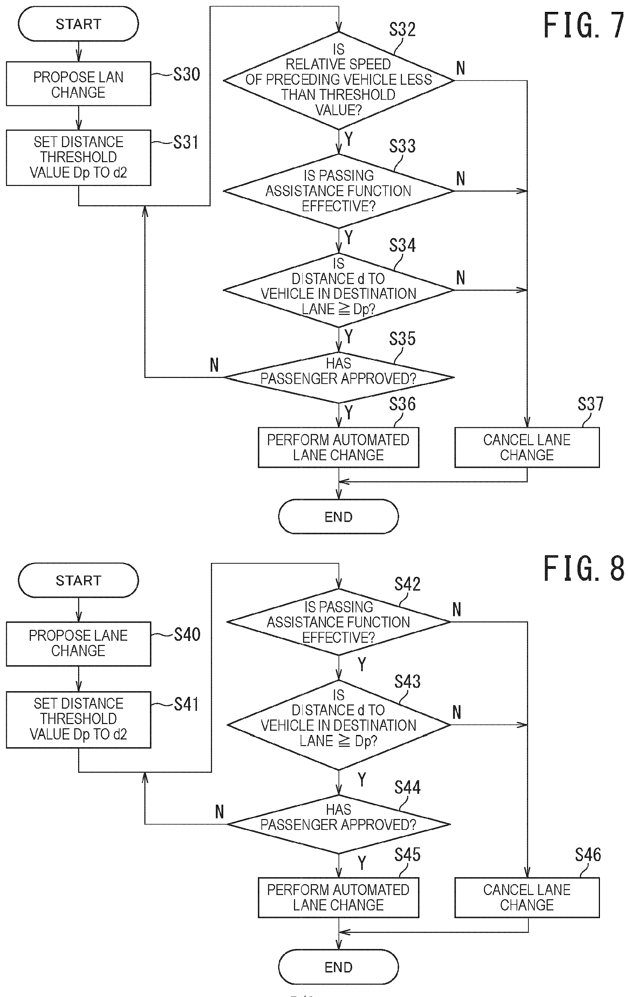

FIG. 7 is a flowchart of an example of processing when a lane change is made in the case where the passing proposal is adopted. In step S30, the lane change state management unit 39 presents the passing proposal to the passenger. In step S31, the lane change state management unit 39 sets the distance threshold value Dp to a value d2.

In step S32, the lane change state management unit 39 determines whether or not the relative speed Vr of the preceding vehicle is less than the threshold speed Vt. When the relative speed Vr is less than the threshold speed Vt (step S32: Y), the process proceeds to step S33. When the relative speed Vr is not less than the threshold speed Vt (step S32: N), the process proceeds to step S37.

In step S33, the lane change state management unit 39 determines whether or not the passing assistance function is effective. When the passing assistance function is effective (step S33: Y), the process proceeds to step S34. When the passing assistance function is not effective (step S33: N), the process proceeds to step S37.

In step S34, the lane change state management unit 39 determines whether or not the distance d between another vehicle in the destination lane and the own vehicle 1 is greater than or equal to the distance threshold value Dp. When the distance d is greater than or equal to the distance threshold value Dp (step S34: Y), the process proceeds to step S35. When the distance d is not greater than or equal to the distance threshold value Dp (step S34: N), the process proceeds to step S37.

In step S35, the lane change state management unit 39 determines whether or not the passenger has approved the passing proposal. When the passenger has approved the passing proposal (step S35: Y), the process proceeds to step S36. When the passenger has not approved the passing proposal (step S35: N), the process returns to step S32.

In step S36, the lane change possibility determination unit 38 determines whether or not the passing execution condition is satisfied. When the passing execution condition is satisfied, the lane change state management unit 39 executes the automated lane change to cause the own vehicle 1 to move to the destination lane. Subsequently, the process terminates. In step S37, the lane change state management unit 39 cancels the passing proposal. Subsequently, the process terminates.

FIG. 8 is a flowchart of an example of processing when a lane change is made in the case where a lane return proposal is adopted. In step S40, the lane change state management unit 39 presents the lane return proposal to the passenger. In step S41, the lane change state management unit 39 sets the distance threshold value Dp to the value d2.

In step S42, the lane change state management unit 39 determines whether or not the passing assistance function is effective. When the passing assistance function is effective (step S42: Y), the process proceeds to step S43. When the passing assistance function is not effective (step S42: N), the process proceeds to step S46.

In step S43, the lane change state management unit 39 determines whether or not the distance d between another vehicle in the destination lane and the own vehicle 1 is greater than or equal to the distance threshold value Dp. When the distance d is greater than or equal to the distance threshold value Dp (step S43: Y), the process proceeds to step S44. When the distance d is not greater than or equal to the distance threshold value Dp (step S43: N), the process proceeds to step S46.

In step S44, the lane change state management unit 39 determines whether or not the passenger has approved the passing proposal. When the passenger has approved the passing proposal (step S44: Y), the process proceeds to step S45. When the passenger has not approved the passing proposal (step S45: N), the process returns to step S42.

In step S45, the lane change possibility determination unit 38 determines whether or not the lane return execution condition is satisfied. When the lane return execution condition is satisfied, the lane change state management unit 39 executes the automated lane change to cause the own vehicle 1 to return to the original lane before passing. Subsequently, the process terminates. In step S46, the lane change state management unit 39 cancels the automated lane change. Subsequently, the process terminates.

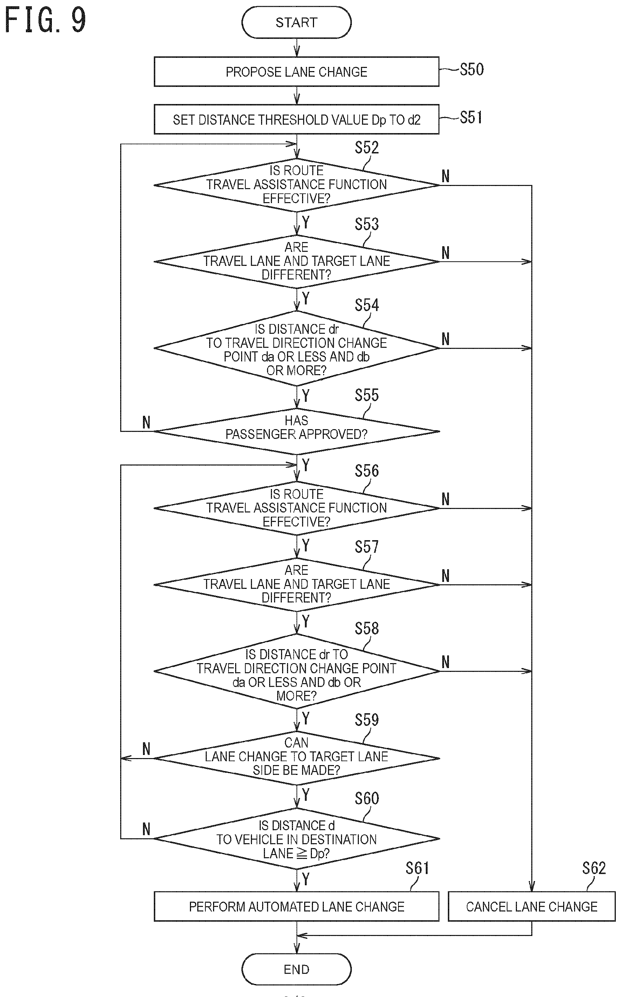

FIG. 9 is a flowchart of an example of processing when a lane change is made in the case where a route travel proposal is adopted. In step S50, the lane change state management unit 39 presents the route travel proposal to the passenger. In step S51, the lane change state management unit 39 sets the distance threshold value Dp to the value d2.

In step S52, the lane change state management unit 39 determines whether or not the route travel assistance function is effective. When the route travel assistance function is effective (step S52: Y), the process proceeds to step S53. When the route travel assistance function is not effective (step S52: N), the process proceeds to step S62.

In step S53, the lane change state management unit 39 determines whether or not the travel lane of the own vehicle 1 and the target lane are different from each other. When the travel lane of the own vehicle 1 and the target lane are different from each other (step S53: Y), the process proceeds to step S54. When the travel lane of the own vehicle 1 and the target lane are not different from each other (step S53: N), the process proceeds to step S62.

In step S54, the lane change state management unit 39 determines whether or not the distance dr from the current position of the own vehicle 1 to a travel direction change point is the distance da or less and the distance db or more. When the distance dr is the distance da or less and the distance db or more (step S54: Y), the process proceeds to step S55. When the distance dr is not the distance da or less and the distance db or more (step S54: N), the process proceeds to step S62.

In step S55, the lane change state management unit 39 determines whether or not the passenger has approved the route travel proposal. When the passenger has approved the route travel proposal (step S55: Y), the process proceeds to step S56. When the passenger has not approved the route travel proposal (step S55: N), the process returns to step S52.

In steps S56 to S58, the lane change possibility determination unit 38 performs the same processing as the processing in steps S52 to S54. When the distance dr to the travel direction change point is the distance da or less and the distance db or more (step S58: Y), the process proceeds to step S59.

In step S59, the lane change possibility determination unit 38 determines whether or not a lane change to the target lane side can be made. When a lane change to the target lane side can be made (step S59: Y), the process proceeds to step S60. When a lane change to the target lane side cannot be made (step S59: N), the process returns to step S56.

In step S60, the lane change possibility determination unit 38 determines whether or not the distance d between another vehicle in the destination lane and the own vehicle 1 is greater than or equal to the distance threshold value Dp. When the distance d is greater than or equal to the distance threshold value Dp (step S60: Y), the process proceeds to step S61. When the distance d is not greater than or equal to the distance threshold value Dp (step S60: N), the process returns to step S56.

In step S61, the lane change state management unit 39 performs the automated lane change to cause the own vehicle 1 to move to the destination lane. Subsequently, the process terminates. In step S62, the lane change state management unit 39 cancels the automated lane change. Subsequently, the process terminates.

### (Advantageous Effects of Embodiment)

(1) The controller 20 performs the driving assistance control to propose a lane change and make a lane change by the autonomous travel control, based on an approval action taken by the passenger. The controller 20 performs processing of, when in the case where the controller 20 detects a preceding vehicle traveling at a speed relatively lower than vehicle speed of the own vehicle 1, first distance that is distance between another vehicle in a first adjacent lane and the own vehicle 1 is determined to be greater than or equal to a first threshold value, starting to propose a lane change to the first adjacent lane, processing of, under the condition that the first distance is greater than or equal to a second threshold value that is smaller than the first threshold value, continuing to propose a lane change to the first adjacent lane, and processing of, when while the controller 20 is proposing a lane change to the first adjacent lane, an approval action is taken by a passenger, causing a turn signal on the first adjacent lane side to operate.

By setting a condition of the first distance for continuing to propose a lane change that is made looser than a condition of the first distance for starting to propose a lane change and combining the condition for continuing to propose a lane change with a condition for causing a turn signal to operate in this way, it is possible to continue to propose a lane change even when the distance between the another vehicle in the adjacent lane and the own vehicle 1 changes after a lane change is proposed. In addition, since a turn signal can be caused to operate in association with an approval action being taken, the distance between the another vehicle in the adjacent lane and the own vehicle 1 becomes less likely to change after the turn signal operates. Thus, frequency of cancellation of a proposal to make a lane change after the lane change is proposed can be reduced.

In addition, a possibility that the passenger mistakenly takes an approval action for a proposal to make a lane change even though the proposal has been canceled immediately after the proposal was made can be reduced.

(2) When an approval action is taken by the passenger while the controller 20 is proposing a lane change to the first adjacent lane, the controller 20 may start a lateral movement of the own vehicle 1 in a direction toward the first adjacent lane side under the condition that the first distance is greater than or equal to the second threshold value. By combining a condition for continuing to propose a lane change with a condition for starting a lateral movement in this way, when a lateral movement does not start even though the passenger takes an approval action for the proposal, it becomes easy for the passenger to recognize that a situation of the first adjacent lane has changed since a time point at which the passenger took the approval action.

(3) The controller 20 may perform processing of setting a proposal point that is a point at which a lane change to a second adjacent lane is proposed, based on a preset target travel route, processing of proposing a lane change to the second adjacent lane when the own vehicle 1 reaches the proposal point, processing of determining whether or not an approval action for a proposal of a lane change to the second adjacent lane is taken by the passenger, processing of, when in the case where the approval action for a proposal of a lane change to the second adjacent lane is taken, second distance that is distance between another vehicle in the second adjacent lane and the own vehicle 1 is determined to be greater than or equal to the second threshold value, causing a turn signal on the second adjacent lane side to operate, and processing of, under the condition that the second distance is greater than or equal to the second threshold value, starting a lateral movement of the own vehicle 1 in a direction toward the second adjacent lane side. Because of this configuration, by not determining whether or not a vacant space exists in the second adjacent lane at the time of proposal when a lane change is proposed based on a preset target travel route, the lane change can be proposed at a desired timing (that is, an intention of the passenger can be confirmed in an early stage). Because of this capability, travel distance after an approval action until a lateral movement starts can be secured. In addition, it is possible to prevent a proposal from being immediately canceled due to change in a surrounding environment after the proposal. In addition, since by using the same second threshold value in the determination of whether or not a vacant space exists in an adjacent lane after approval of a proposal between a proposal of a lane change based on a target travel route of the own vehicle 1 and a proposal of a lane change due to existence of a preceding vehicle slower than the **own** vehicle 1, a series of system determinations for a lane change after an approval action can be unified, it becomes easy for the passenger to forecast movement of the vehicle after approval.

### Reference Signs List

- 1: Own vehicle
- 10: Driving assistance device
- 11: Sensor
- 12: Positioning device
- 13: Map DB
- 14: In-vehicle device
- 15: Navigation system
- 16: Display device
- 17: Sound output device
- 18: Input device
- 19: Vehicle behavior control device

## Claims

1. A driving assistance method for proposing a lane change and making a lane change by autonomous travel control, based on an approval action taken by a passenger, the driving assistance method causing a controller (20) to perform processing comprising:
when in a case of detecting a preceding vehicle traveling at a speed relatively lower than vehicle speed of an own vehicle (1), a first distance, the first distance being distance between another vehicle in a first adjacent lane and the own vehicle (1), is determined to be greater than or equal to a first threshold value, starting (S2, S4, S6) to propose a lane change to the first adjacent lane;
under a condition that the first distance is greater than or equal to a second threshold value, the second threshold value being smaller than the first threshold value, continuing (S34) to propose a lane change to the first adjacent lane, and canceling a proposal of the lane change when the first distance becomes less than the second threshold value; and
when while proposing a lane change to the first adjacent lane, an approval action is taken by the passenger, causing (S36) a turn signal on a first adjacent lane side to operate.

2. The driving assistance method according to claim 1, wherein when an approval action is taken by the passenger while the controller (20) is proposing a lane change to the first adjacent lane, the controller (20) starts a lateral movement of the own vehicle (1) in a direction toward the first adjacent lane side under a condition that the first distance is greater than or equal to the second threshold value.

3. The driving assistance method according to claim 1 or 2 performing processing comprising:
setting a proposal point, the proposal point being a point at which a lane change to a second adjacent lane is proposed, based on a preset target travel route;
proposing a lane change to the second adjacent lane when the own vehicle (1) reaches the proposal point;
determining whether or not an approval action for a proposal of a lane change to the second adjacent lane is taken by the passenger;
when in a case where the approval action for a proposal of a lane change to the second adjacent lane is taken, a second distance, the second distance being distance between another vehicle in the second adjacent lane and the own vehicle (1), is determined to be greater than or equal to the second threshold value, causing a turn signal on a second adjacent lane side to operate; and
under a condition that the second distance is greater than or equal to the second threshold value, starting a lateral movement of the own vehicle (1) in a direction toward the second adjacent lane side.

4. A driving assistance device (10) configured to propose a lane change and make a lane change by autonomous travel control, based on an approval action taken by a passenger, the driving assistance device comprising a controller (20) configured to perform processing comprising:
when in a case of detecting a preceding vehicle traveling at a speed relatively lower than vehicle speed of an own vehicle (1), a first distance, the first distance being distance between another vehicle in a first adjacent lane and the own vehicle (1), is determined to be greater than or equal to a first threshold value, starting (S2, S4, S6) to propose a lane change to the first adjacent lane;
under a condition that the first distance is greater than or equal to a second threshold value, the second threshold value being smaller than the first threshold value, continuing (S34) to propose a lane change to the first adjacent lane, and canceling a proposal of the lane change when the first distance becomes less than the second threshold value; and
when while proposing a lane change to the first adjacent lane, an approval action is taken by the passenger, causing (S36) a turn signal on a first adjacent lane side to operate.

## Patentansprüche

1. Fahrassistenzverfahren zum Vorschlagen eines Spurwechsels und zum Durchführen eines Spurwechsels durch autonome Fahrsteuerung auf Grundlage einer von einem Fahrer vorgenommenen Bestätigungshandlung, wobei das Fahrassistenzverfahren eine Steuerung (20) veranlasst, eine Verarbeitung durchzuführen, umfassend:
wenn in einem Fall des Erkennens eines vorausfahrenden Fahrzeugs, das mit einer Geschwindigkeit fährt, die relativ niedriger als eine Fahrzeuggeschwindigkeit eines eigenen Fahrzeugs (1) ist, ein erster Abstand, wobei der erste Abstand ein Abstand zwischen einem anderen Fahrzeug in einer ersten benachbarten Fahrspur und dem eigenen Fahrzeug (1) ist, als größer als oder gleich einem ersten Schwellenwert bestimmt wird, Beginnen (S2, S4, S6), einen Spurwechsel auf die erste benachbarte Fahrspur vorzuschlagen;
unter einer Bedingung, dass der erste Abstand größer oder gleich einem zweiten Schwellenwert ist, wobei der zweite Schwellenwert kleiner als der erste Schwellenwert ist, Fortsetzen (S34), einen Spurwechsel auf die erste benachbarte Fahrspur vorzuschlagen, und Aufheben eines Vorschlags für den Spurwechsel, wenn der erste Abstand kleiner als der zweite Schwellenwert wird; und
wenn während des Vorschlagens eines Spurwechsels auf die erste benachbarte Fahrspur eine Bestätigungshandlung durch den Fahrer vorgenommen wird, Veranlassen (S36), ein Abbiegesignal auf einer Seite der ersten benachbarten Fahrspur zu betreiben.

2. Fahrassistenzverfahren nach Anspruch 1, wobei, wenn eine Bestätigungshandlung durch den Fahrer vorgenommen wird, während die Steuerung (20) einen Spurwechsel auf die erste benachbarte Fahrspur vorschlägt, die Steuerung (20) eine seitliche Bewegung des eigenen Fahrzeugs (1) in eine Richtung zu der ersten benachbarten Fahrspur unter einer Bedingung, dass der erste Abstand größer oder gleich dem zweiten Schwellenwert ist, beginnt.

3. Fahrassistenzverfahren nach Anspruch 1 oder 2, das Verarbeitung durchführt, umfassend:
Einstellen eines Vorschlagspunkts, wobei der Vorschlagspunkt ein Punkt ist, an dem ein Spurwechsel auf eine zweite benachbarte Fahrspur vorgeschlagen wird, auf Grundlage einer voreingestellten Zielfahrstrecke;
Vorschlagen eines Spurwechsels auf die zweite benachbarte Spur, wenn das eigene Fahrzeug (1) den Vorschlagspunkt erreicht;
Bestimmen, ob der Fahrer eine Bestätigungshandlung für einen Vorschlag eines Spurwechsels auf die zweite benachbarte Spur vornimmt oder nicht;
wenn in einem Fall, in dem die Bestätigungshandlung für einen Vorschlag eines Spurwechsels auf die zweite benachbarte Spur vorgenommen wird, ein zweiter Abstand, wobei der zweite Abstand Abstand zwischen einem anderen Fahrzeug in der zweiten benachbarten Fahrspur und dem eigenen Fahrzeug (1) ist, als größer als oder gleich dem zweiten Schwellenwert bestimmt wird, Veranlassen, ein Abbiegesignal auf einer Seite der zweiten benachbarten Fahrspur zu betreiben; und
unter einer Bedingung, dass der zweite Abstand größer als oder gleich dem zweiten Schwellenwert ist, Beginnen einer seitlichen Bewegung des eigenen Fahrzeugs (1) in einer Richtung zu der Seite der zweiten benachbarten Fahrspur.

4. Fahrassistenzvorrichtung (10), die konfiguriert ist zum Vorschlagen eines Spurwechsels und zum Durchführen eines Spurwechsels durch autonome Fahrsteuerung auf Grundlage einer von einem Fahrer vorgenommenen Bestätigungshandlung, wobei die Fahrassistenzvorrichtung eine Steuerung (20) umfasst, die konfiguriert ist zum Durchführen von Verarbeitung, umfassend:
wenn in einem Fall des Erkennens eines vorausfahrenden Fahrzeugs, das mit einer Geschwindigkeit fährt, die relativ niedriger als eine Fahrzeuggeschwindigkeit eines eigenen Fahrzeugs (1) ist, ein erster Abstand, wobei der erste Abstand ein Abstand zwischen einem anderen Fahrzeug in einer ersten benachbarten Fahrspur und dem eigenen Fahrzeug (1) ist, als größer als oder gleich einem ersten Schwellenwert bestimmt wird, Beginnen (S2, S4, S6), einen Spurwechsel auf die erste benachbarte Fahrspur vorzuschlagen;
unter einer Bedingung, dass der erste Abstand größer oder gleich einem zweiten Schwellenwert ist, wobei der zweite Schwellenwert kleiner als der erste Schwellenwert ist, Fortsetzen (S34), einen Spurwechsel auf die erste benachbarte Fahrspur vorzuschlagen, und Aufheben eines Vorschlags für den Spurwechsel, wenn der erste Abstand kleiner als der zweite Schwellenwert wird; und
wenn während des Vorschlagens eines Spurwechsels auf die erste benachbarte Fahrspur eine Bestätigungshandlung durch den Fahrer vorgenommen wird, Veranlassen (S36), ein Abbiegesignal auf einer Seite der ersten benachbarten Fahrspur zu betreiben.

## Revendications

1. Procédé d'assistance à la conduite pour proposer et effectuer un changement de voie par un contrôle de conduite autonome sur la base d'une action d'approbation prise par un passager, le procédé d'assistance à la conduite commandant à un contrôleur (20) de mettre en œuvre un traitement comprenant :
quand, en cas de détection d'un véhicule qui précède circulant à une vitesse relativement inférieure à la vitesse d'un véhicule propre (1), une première distance est déterminée comme étant supérieure ou égale à une première valeur seuil, la première distance étant la distance entre un autre véhicule dans une première voie adjacente et le véhicule propre (1), l'initiation (S2, S4, S6) de la proposition d'un changement de voie vers la première voie adjacente ;
sous la condition que la première distance soit supérieure ou égale à une deuxième valeur seuil, la deuxième valeur seuil étant inférieure à la première valeur seuil, la continuation (S34) de la proposition d'un changement de voie vers la première voie adjacente, et l'annulation de la proposition de changement de voie quand la première distance devient inférieure à la deuxième valeur seuil ; et
quand, pendant la proposition d'un changement de voie vers la première voie adjacente, une action d'approbation est prise par le passager, la commande (S36) d'activation d'un indicateur de direction du côté de la première voie adjacente.

2. Procédé d'assistance à la conduite selon la revendication 1, dans lequel, quand une action d'approbation est prise par le passager alors que le contrôleur (20) propose un changement de voie vers la première voie adjacente, le contrôleur (20) initie un mouvement latéral du véhicule propre (1) en direction du côté de la première voie adjacente sous la condition que la première distance soit supérieure ou égale à la deuxième valeur seuil.

3. Procédé d'assistance à la conduite selon la revendication 1 ou 2, mettant en œuvre un traitement comprenant :
la définition d'un point de proposition, le point de proposition étant un point où un changement de voie vers une deuxième voie adjacente est proposé, sur la base d'un itinéraire de circulation cible prédéfini ;
la proposition d'un changement de voie vers la deuxième voie adjacente quand le véhicule propre (1) atteint le point de proposition ;
la détermination du fait qu'une action d'approbation pour une proposition de changement de voie vers la deuxième voie adjacente est prise ou non par le passager ;
quand, dans le cas où l'action d'approbation d'une proposition de changement de voie vers la deuxième voie adjacente est prise, une deuxième distance est déterminée comme étant supérieure ou égale à la deuxième valeur seuil, la deuxième distance étant la distance entre un autre véhicule dans la deuxième voie adjacente et le véhicule propre (1), la commande de l'activation d'un indicateur de direction sur le côté d'une deuxième voie adjacente ; et
sous la condition que la deuxième distance soit supérieure ou égale à la deuxième valeur seuil, l'initiation d'un mouvement latéral du véhicule propre (1) en direction du côté de la deuxième voie adjacente.

4. Dispositif d'assistance à la conduite (10) configuré pour proposer et effectuer un changement de voie par contrôle de conduite autonome sur la base d'une action d'approbation prise par un passager, le dispositif d'assistance à la conduite comprenant un contrôleur (20) configuré pour mettre en œuvre un traitement comprenant :
quand, en cas de détection d'un véhicule qui précède circulant à une vitesse relativement inférieure à la vitesse d'un véhicule propre (1), une première distance est déterminée comme étant supérieure ou égale à une première valeur seuil, la première distance étant la distance entre un autre véhicule dans une première voie adjacente et le véhicule propre (1), l'initiation (S2, S4, S6) de la proposition d'un changement de voie vers la première voie adjacente ;
sous la condition que la première distance soit supérieure ou égale à une deuxième valeur seuil, la deuxième valeur seuil étant inférieure à la première valeur seuil, la continuation (S34) de la proposition d'un changement de voie vers la première voie adjacente, et l'annulation de la proposition de changement de voie quand la première distance devient inférieure à la deuxième valeur seuil ; et
quand, pendant la proposition d'un changement de voie vers la première voie adjacente, une action d'approbation est prise par le passager, la commande (S36) d'activation d'un indicateur de direction du côté de la première voie adjacente.
